# FASCICULE DE BREVET EUROPEEN

(11) **EP 3 670 394 B1**
(45) Date de publication et mention de la délivrance du brevet: **02.07.2025**
(21) Numéro de dépôt: 19201131.0
(22) Date de dépôt: 02.10.2019
(51) Int. Cl.: B65G 17/36, B65G 65/06, B65G 65/32, B65G 17/12, B65G 65/46, B65G 47/58

(54) **ÉLÉVATEUR À GODETS DE CONVOYAGE D'UN GRANULAT ÉQUIPÉ D'UN APPAREIL À PERCUSSION DE MISE EN MOUVEMENT D'UN RÉSIDU DE GRANULAT EN FOND DE CUVE ET PROCÉDÉ DE MISE EN OEUVRE D'UN TEL APPAREIL**
BECHERWERK FÜR GRANULAT, AUSGESTATTET MIT EINEM SCHLAGGERÄT ZUR BEWEGUNG EINES GRANULATBESTANDES AM KESSELBODEN UND VERFAHREN ZUM BETRIEB EINES SOLCHEN GERÄTS
BUCKET LIFT FOR CONVEYING A GRANULATE EQUIPPED WITH AN IMPACT DEVICE FOR MOVING A GRANULATE RESIDUE AT THE BOTTOM OF THE TANK, AND METHOD OF OPERATING SUCH A DEVICE

(30) Priorité: 21.12.2018 FR 1874004
(43) Date de publication de la demande: 24.06.2020
(73) Titulaire: DENIS, 28160 Brou (FR)
(72) Inventeur: LIZAMBARD, Stéphane, 28160 BROU (FR)
(74) Mandataire: Gauchet, Fabien Roland

(56) Documents cités:
- CH-A- 264 790
- CN-A- 108 945 849
- JP-A- S6 071 410
- SU-A1- 831 672

## Description

### Domaine technique de l'invention

L'invention relève du domaine des convoyeurs par paquets d'un granulat. L'invention concerne plus particulièrement les élévateurs à godets de convoyage en vrac et par paquets d'un granulat, céréalier notamment. L'invention porte plus spécifiquement sur les modalités de mise en mouvement et de collecte par les godets, d'un résidu de granulat en fond d'une cuve de collecte du granulat à convoyer que comprend un tel élévateur à godets.

### Art antérieur

Dans le domaine du matériel agricole, il est courant d'utiliser un élévateur à godets pour approvisionner un silo, en vrac et par paquets, de grains de céréales ou par analogie de farine céréalière. L'élévateur est agencé en une colonne qui s'étend verticalement en élévation depuis le sol et qui loge un convoyeur à godets. La base de la colonne est agencée en cuve d'admission depuis l'extérieur de l'élévateur des grains à convoyer, et le sommet de la colonne est agencé en déversoir hors de l'élévateur vers le silo des grains convoyés.

Le convoyeur s'étend en élévation à l'intérieur de la colonne entre la cuve et le déversoir, et comprend des godets répartis le long d'une sangle refermée en boucle sur elle-même. Les godets sont entraînés par la sangle entre la cuve et le déversoir, en circulant de préférence à l'intérieur de conduits ménagés à l'intérieur de la colonne. La sangle est maintenue en tension entre ses extrémités autour de tambours de guidage et/ou d'entraînement de la sangle, qui sont montés tournant sur la colonne. Un tambour inférieur est disposé à l'intérieur de la cuve pour permettre aux godets de piocher le granulat à l'intérieur de la cuve, et un tambour supérieur est disposé à l'intérieur du déversoir vers lequel les godets sont vidés préalablement à leur retour vers la cuve.

Ainsi la mise en rotation motorisée de l'un au moins des tambours, notamment au moins le tambour supérieur, procure un entraînement de la sangle refermée en boucle sur elle-même, qui circule en périphérie des tambours pour son guidage et/ou son entraînement. Les godets sont successivement acheminés via la sangle depuis la cuve vers le déversoir, puis depuis le déversoir vers la cuve. Le granulat admis à l'intérieur de la cuve peut ainsi être collecté en continu en vrac et par parquets de grains successivement piochés en fond de cuve par les godets, pour leur convoyage depuis la cuve vers le sommet de la colonne et leur évacuation hors de l'élévateur vers le silo via le déversoir.

La mise sous tension de la sangle est par exemple réglée via l'un au moins des tambours, qui est monté verticalement mobile sur la colonne en étant immobilisable sur la colonne à un seuil de consigne de mise sous tension de la sangle. A partir d'un réglage de l'éloignement vertical des tambours l'un de l'autre et du blocage en position dudit au moins un tambour mobile verticalement sur la colonne, la sangle peut être maintenue sous tension audit seuil de consigne.

Il se pose dès lors le problème de la vidange régulière de la cuve, pour éviter une stagnation d'un reliquat de granulat en fond de cuve. En effet pour autoriser le passage des godets à l'intérieur de la cuve suivant une course incurvée par suite de la circulation de la sangle en périphérie du tambour inférieur, un écart vertical est prévu entre les godets et une paroi de fond de la cuve. Un tel écart ménage alors entre les godets et une paroi de fond de la cuve sur laquelle repose le granulat admis dans l'élévateur, une capacité à l'intérieur de laquelle un reliquat de grains peut stagner.

Ceci est à éviter car une telle stagnation de grains en fond de cuve est source de désagréments et/ou d'une mise au rebut des grains confinés en fond de cuve, et donc est cause d'une perte de marchandises. Une vidange régulière de la cuve est alors nécessaire, car une stagnation de grains à l'intérieur de la cuve est source d'une contamination de l'élévateur par des moisissures et/ou par des mycotoxines, et favorise la prolifération d'insectes et/ou la présence potentielle de rongeurs.

En outre lors d'un changement de céréales à convoyer, la cuve doit être vidangée d'un reliquat de granulat précédemment convoyé, préalablement à l'admission dans l'élévateur d'un granulat d'une céréale différente de la précédente. A cet effet, la cuve est couramment munie d'une ou de plusieurs trappes d'accès à son volume intérieur, pour permettre à un opérateur de vidanger la cuve.

Cependant, la vidange régulière de la cuve est contraignante, souvent longue et/ou malaisée à effectuer par l'opérateur, de surcroît dans un environnement potentiellement insalubre. En outre, les modalités de vidange de la cuve nécessitent souvent des aménagements coûteux de l'élévateur qui sont commercialement à éviter. C'est pourquoi il a été proposé des solutions pour éviter une stagnation d'un reliquat de granulat en fond de cuve. De telles solutions consistent globalement à provoquer une dispersion à l'intérieur de la cuve d'un éventuel reliquat de granulat susceptible de stagner en son fond, de manière à permettre une collecte du reliquat de granulat par les godets.

Il a par exemple été proposé par les documents SU831672-A1 (VNII LINEJNOVO MASH) et JP26977339-B2 (HITACHI METALS Ltd), de provoquer une dispersion du reliquat de granulat présent en fond de cuve par projection d'air à l'intérieur de la cuve. Il a aussi été suggéré par le document JPS6071410-A (SATAKE ENG CO Ltd), de ménager en fond de la cuve un diaphragme en matériau élastiquement déformable et de l'animer par un vibrateur provoquant sa déformation élastique. Par suite de sa détente élastique, le diaphragme projette alors le reliquat de granulat présent en fond de cuve vers les godets. JPS6071410-A divulgue un élévateur à godets selon le préambule de la revendication 1.

De telles solutions visant à disperser le granulat présent en fond de cuve vers les godets présentent cependant des inconvénients.

Par exemple, une dispersion par projection d'air du reliquat de granulat est génératrice de poussières susceptibles de porter atteinte au fonctionnement du convoyeur et/ou aux dispositifs utilisés pour pulvériser l'air à l'intérieur de la cuve, avec pour conséquence d'induire des opérations de maintenance de l'élévateur pouvant être soutenues et coûteuses.

En outre, une dispersion de granulat par projection d'air est génératrice d'une mise en suspension de poussières organiques, au risque de produire une atmosphère explosive à l'intérieur de l'élévateur.

Par exemple encore, la projection du reliquat de granulat par mise en détente d'un diaphragme en élastomère soumet ce dernier à une fatigue conséquente, et donc à une usure rapide, ce qui nécessite un remplacement régulier du diaphragme et par suite accroît les coûts de fonctionnement de l'élévateur.

### Présentation générale de l'invention

Dans ce contexte et compte tenu de ce qui précède, la présente invention a pour objet un élévateur à godets comprenant un appareil de dispersion d'un reliquat de granulat en fond de cuve, notamment un granulat de produits céréaliers et/ou par analogie un produit pulvérulent tel que de la farine céréalière. L'invention a aussi pour objet un procédé de mise en œuvre d'un appareil de dispersion d'un reliquat de granulat en fond de la cuve d'un élévateur à godets selon l'invention.

Le but de l'invention est de proposer une solution pour éviter qu'un reliquat de granulat ne stagne à l'intérieur de la cuve en son fond, notamment pour obvier au moins aux désagréments et/ou aux difficultés précédemment mentionnées résultant d'une telle stagnation. Une telle solution est recherchée sans affecter la sécurisation de l'élévateur, notamment vis-à-vis d'un risque de production d'une atmosphère explosive.

Un autre but de l'invention est de rechercher une telle solution procurant un refoulement d'un résidu de granulat présent en fond de la cuve vers les godets qui surplombent une paroi de fond de la cuve lors de leur passage en fond de cuve. Il est notamment recherché un compromis entre éviter une dispersion excessive du granulat à l'intérieur de la cuve, pour éviter sa propagation à l'intérieur de l'élévateur et l'obtention d'une vidange efficace de la cuve par les godets.

Un autre but de l'invention est de rechercher une telle solution qui permette de contrôler et/ou de réguler un refoulement d'un résidu de granulat présent en fond de la cuve vers les godets balayant son fond, qui est modéré mais néanmoins suffisant pour procurer une évacuation efficace vers les godets du résidu de granulat hors du fond de la cuve.

Un autre but de l'invention est de proposer une solution n'affectant pas le caractère robuste de l'élévateur, qui soit fiable et pérenne, dont l'organisation structurelle permette son obtention à moindres coûts et dont ses modalités de mise en œuvre permettre d'éviter un accroissement commercialement rédhibitoire des coûts d'investissement et/ou de fonctionnement de l'élévateur.

Les buts visés par la présente invention sont atteints isolément ou en combinaison par application des dispositions qui suivent.

L'objet de l'invention est élévateur à godet muni d' un appareil de dispersion d'un reliquat de granulat en fond de cuve d'un élévateur à godets, du type comprenant un organe générateur de vibrations d'une paroi de fond de la cuve.

Selon l'invention, l'organe générateur de vibrations comprend au moins un percuteur et une motorisation de mise en mobilité séquentielle dudit au moins un percuteur entre une station inactive et une station active du percuteur. En station inactive, le percuteur est en position stable. En station active, le percuteur est entraîné en mobilité par la motorisation pour heurter une dite paroi de fond rigide de la cuve et ainsi transmettre par résonance massique l'énergie reçue par la paroi de fond rigide de la cuve aux grains composant le granulat.

L'appareil et la paroi de fond de la cuve sont ainsi robustes et pérennes, l'appareil étant configuré pour exercer des frappes répétées contre une paroi de fond rigide de la cuve par le percuteur, pour refouler un reliquat du granulat susceptible de stagner en fond de cuve vers les godets de l'élévateur lors de leur passage à l'intérieur de la cuve. La rigidité de la paroi de fond de la cuve lui confère une tenue naturelle en conformation globale apte à supporter les heurts auxquels elle est soumise sans altérer son maintien global en conformation.

Dès lors, l'énergie massique de la paroi de fond frappée par des heurts séquentiellement répétés est dissipée par effet de résonance massique vers les grains composant le granulat, ce qui provoque finalement leur refoulement vers les godets sans affecter la robustesse et/ou la pérennité de la paroi de fond qui est globalement maintenue en conformation.

Selon une forme de réalisation, ledit au moins un percuteur est monté mobile sur l'appareil entre sa station active et sa station inactive, via un organe d'entraînement dudit au moins un percuteur qui est mû par un moteur que comprend ladite motorisation. Il est compris ici que la motorisation comprend au moins un dit organe d'entraînement dudit au moins un percuteur et au moins un dit moteur, qui est notamment équipé d'une servocommande régulant la mise en œuvre du moteur en provoquant une mise en mobilité séquentielle dudit au moins un percuteur entre sa station inactive et sa station active.

Le moteur est susceptible d'être indifféremment un moteur tournant de mise en rotation séquentiellement alternée dudit organe d'entraînement ou un moteur de mise en translation séquentiellement alternée dudit organe d'entraînement. Le moteur est susceptible d'être indifféremment un moteur à énergie électrique ou un moteur à énergie fluidique, énergie hydraulique ou énergie pneumatique notamment.

La servocommande régule la mise en œuvre du moteur selon un ou plusieurs paramètres de calibrage prédéfinis de l'appareil, tels que par exemple selon la quantité de reliquat de granulat présent en fond de cuve, la distance de séparation entre ledit au moins un percuteur et la paroi de fond de la cuve, et/ou la distance de séparation entre la paroi de fond de la cuve et les godets lors de leur passage en fond de cuve.

Selon une forme de réalisation, ledit au moins un percuteur est monté élastiquement mobile sur l'appareil, via un organe élastiquement déformable interposé entre le dit organe d'entraînement et au moins une masse de frappe que comprend le percuteur.

Ladite au moins une masse de frappe est de préférence habillée d'un tampon pour éviter de blesser localement la paroi de fond de la cuve lors de sa frappe par ledit au moins un percuteur. Un tel tampon peut être par exemple formé d'une enveloppe d'habillage de la masse de frappe, comme par exemple une enveloppe en feutre, en matière alvéolaire ou en résine plus ou moins dense, élastomère notamment.

Le montage en mobilité élastique du percuteur favorise son accélération vers la paroi de fond de la cuve lors de sa frappe, ce qui accroît l'énergie qu'elle reçoit et par suite améliore le refoulement du reliquat de granulat vers les godets. Un tel refoulement du granulat reste modéré mais suffisant pour procurer un déplacement des grains composant le granulat vers les godets et leur collecte lors du passage des godets en fond de cuve. En outre, le montage en mobilité élastique du percuteur sur l'appareil permet de garantir la frappe de la paroi de fond de la cuve par le percuteur.

Selon une forme de réalisation ledit au moins un percuteur est agencé en marteau mobile en basculement, comprenant au moins une dite masse de frappe qui est montée à une première extrémité d'un bras dont l'autre deuxième extrémité est reliée audit organe d'entraînement.

De préférence, le bras forme au moins en partie ledit organe élastiquement déformable, en étant flexible entre ses extrémités et générateur en station active d'une mobilité en basculement élastique du percuteur via ledit organe d'entraînement.

Il est compris ici que la flexibilité du bras ne fait pas obstacle à son maintien naturel en conformation en station inactive. Le bras est notamment agencé en lame, dont la largeur est orientée perpendiculairement à la direction de mobilité en basculement du percuteur, ou en tige de forme cylindrique. Le bras est par exemple issu d'un matériau métallique ou par exemple encore est issu d'un matériau stratifié alternant par exemple des couches de métal et de résine, ce qui conforte sa robustesse sans affecter son caractère flexible en fonctionnement.

Par exemple encore selon une autre forme de réalisation, ledit au moins un percuteur est agencé en came tournante mue par l'organe d'entraînement et porteuse à sa périphérie d'au moins une dite masse de frappe.

Par exemple encore selon une autre forme de réalisation, ledit au moins un percuteur est agencé en piston manœuvrable verticalement entre sa position rétractée dans laquelle le percuteur est en station inactive et sa position de déploiement dans laquelle le percuteur est en station active. Un tel percuteur agencé en piston est notamment prévu d'être placé en contrebas de la paroi de fond de la cuve. Une pluralité de tels percuteurs agencés en piston sont potentiellement répartis sous la paroi de fond de la cuve, en étant de préférence mis en mobilité entre leur position inactive et leur position active selon des séquences de manœuvre individuelles qui sont différenciées.

Selon une forme de réalisation, les percuteurs sont de préférence en pluralité. Les masses de frappe respectives d'au moins deux percuteurs sont distantes l'une de l'autre suivant au moins une direction concourante à une orientation de mises en mobilité individuelles des percuteurs entre leur station inactive et leur station active.

Selon une forme de réalisation, ledit moteur est formé d'un vérin d'entraînement séquentiel en pivotement alterné d'un arbre tournant constitutif dudit organe d'entraînement, via lequel arbre tournant une pluralité de percuteurs sont individuellement mis en mobilité entre leur station inactive et leur station active suivant des cinématiques propres qui sont différenciées.

Ledit arbre tournant est potentiellement muni, ou par analogie agencé, en au moins une came de mise en mobilité des percuteurs selon des cinématiques prédéfinies qui leur sont propres. Selon une variante, les percuteurs agencés en marteaux sont montés sur l'arbre tournant en étant angulairement répartis par rapport à l'axe de rotation de l'arbre tournant. Dans le cas où les masses de frappe des percuteurs sont distantes l'une de l'autre tel que précédemment visé, la répartition angulaire des percuteurs prend de préférence en compte la distance de séparation des masses de frappe l'une de l'autre.

L'organisation de l'appareil permet son installation aisée hors de la cuve, par exemple à l'intérieur d'un local technique ménagé en partie inférieure de la base de l'élévateur à godets ou, et de préférence, à l'intérieur d'un caisson s'étendant en contrebas de la paroi de fond de la cuve, à laquelle le caisson est de préférence fixé tel que visé plus loin. Ceci évite une mise en contact entre l'ensemble de l'appareil et le granulat contenu à l'intérieur de la cuve. L'organisation de l'appareil permet aussi son obtention à moindres coûts et limite les opérations nécessaires à sa maintenance, ce qui lui confère une compétitivité ne faisant pas obstacle à sa commercialisation au regard de son efficacité et des avantages qu'il procure pour résorber un reliquat de granulat en fond de cuve.

L'élévateur comprend classiquement une colonne s'étendant en élévation verticalement par rapport au sol et logeant un convoyeur à godets. Le convoyeur comprend une sangle qui est refermée en boucle sur elle-même et le long de laquelle sont répartis des godets. Les extrémités de la sangle s'étendent respectivement en périphérie d'un tambour supérieur ménagé tournant au sommet de la colonne et d'un tambour inférieur ménagé tournant à la base de la colonne. La sangle est entraînée en mobilité sur elle-même via l'un au moins desdits tambours qui est motorisé en rotation. Une cuve de réception d'un granulat à convoyer vers le sommet de la colonne, via lesdits godets, est ménagée à la base de la colonne et comprend une paroi de fond sur laquelle le granulat est prévu de reposer.

Ainsi tel que classiquement le convoyeur est apte à acheminer en vrac et par paquets successifs via les godets, un granulat ou un produit pulvérulent introduit à l'intérieur de la cuve via une bouche d'admission ménagée à la base de la colonne en surplomb de la cuve, vers un déversoir du granulat ménagé au sommet de la colonne via lequel le granulat est évacué hors de l'élévateur, notamment vers un silo. Le granulat est notamment un granulat de céréales en grains ou un produit pulvérulent tel que de la farine.

On notera dès à présent que ladite paroi de fond est du type courant formée d'une paroi rigide, c'est-à-dire conservant son maintien naturel en conformation lors du fonctionnement de l'élévateur et/ou du dit au moins un appareil conforme à l'invention dont l'élévateur à godets est prévu d'être équipé.

Dans ce contexte et plus spécifiquement, l'élévateur à godets de l'invention est reconnaissable en ce qu'il est équipé d'un appareil tel qu'il vient d'être décrit, qui est disposé à l'extérieur de la cuve. Ladite motorisation de l'appareil est disposée à distance en contrebas de la paroi de fond de la cuve et ledit au moins un percuteur s'étend sous la paroi de fond de la cuve, qui est formée d'une paroi mince, comme une tôle par exemple, arquée suivant le trajet suivi par la sangle en périphérie du tambour inférieur.

Selon une forme de réalisation, l'appareil est installé à l'intérieur d'un caisson qui s'étend sous la cuve ou en d'autres termes en contrebas de la cuve. Le caisson est fixé en suspension sur une paroi latérale de la cuve, préférentiellement par brochage réversible, tel que par exemple via des organes de fixation agencés en boulons pour autoriser un montage réversible du caisson sur la cuve.

Il est compris ici que la fixation du caisson latéralement sur la cuve exclut sa mise en prise directe sur la paroi de fond de la cuve, pour éviter d'altérer son maintien en conformation sous l'effet du poids du caisson à l'intérieur duquel l'appareil de l'invention est logé.

Ainsi en position stable du percuteur, la distance de séparation entre la masse de frappe du percuteur et le fond de la cuve est constante. Ceci permet de garantir la frappe de la paroi de fond de la cuve par le percuteur lors de la mise en œuvre de l'appareil, et cela sans avoir à prévoir un aménagement complexe et coûteux de l'appareil. L'exécution par un opérateur d'une éventuelle opération de calibrage de l'appareil en est facilitée, préalablement à l'utilisation de l'appareil ou lors de son installation sur site, pour régler la distance de séparation entre la masse de frappe du percuteur et le fond de la cuve en position stable du percuteur.

Selon une forme de réalisation, la cuve et un palier de montage tournant du tambour inférieur sur la colonne forme au moins en partie un ensemble d'organes qui est monté en mobilité verticale sur la colonne, via un premier dispositif de réglage d'une mise sous tension de la sangle entre ses extrémités par éloignement vertical dudit ensemble d'organes par rapport au tambour supérieur. L'élévateur est aussi équipé d'un deuxième dispositif de réglage de la distance de séparation entre la paroi de fond de la cuve et les godets lors de leur passage en fond de cuve, par montage en mobilité relative entre la cuve et le palier du tambour inférieur, verticalement au sein dudit ensemble d'organes.

Il est compris ici que ledit deuxième dispositif de réglage est distinct du premier dispositif de réglage, notamment au regard de leurs mises en œuvre respectives, sans néanmoins exclure l'utilisation d'un ou de plusieurs organes pouvant leur être avantageusement communs.

Un tel aménagement de l'élévateur permet d'ajuster avec précision un écart entre les godets en position de passage en fond de cuve et la paroi de fond de la cuve via le deuxième dispositif de réglage, indépendamment d'une opération spécifique de réglage d'une mise sous tension de la sangle entre ses extrémités via le premier dispositif de réglage.

Le volume du reliquat de granulat stagnant en fond de cuve peut ainsi être au mieux réduit, ce qui favorise la rapidité de son évacuation vers les godets par suite de la mise en œuvre de l'appareil de l'invention. L'énergie nécessaire au refoulement du reliquat de granulat vers les godets lors de leur passage en fond de cuve peut être de faible ampleur, sans affecter l'efficacité obtenue d'une évacuation vers les godets du reliquat de granulat, et cela malgré la rigidité de la paroi de fond de la cuve lui conférant sa robustesse et son maintien en conformation globale malgré les heurts qu'elle subit via le ou les percuteurs.

De préférence, ledit ensemble d'organes comprenant la cuve et le palier du tambour inférieur est guidé en mobilité verticale sur la colonne, comme par exemple via des coulisses équipant la colonne en étant orientées verticalement.

Selon une forme de réalisation, ledit au moins un percuteur est placé sous la paroi de fond de la cuve en aval des godets suivant le sens de circulation de la sangle en périphérie du tambour inférieur et par rapport à un axe vertical de positionnement sur la colonne de l'axe de rotation du tambour inférieur.

Ceci permet notamment, par suite de la mise en œuvre de l'appareil de l'invention, de favoriser un refoulement du reliquat de granulat directement vers les bouches des godets lors de leur passage en fond de cuve depuis leur position amont en phase descendante des godets vers leur position aval en phase remontante des godets. Il est compris ici que lesdites positions amont et aval sont considérées proches et respectivement de part et d'autre dudit axe vertical.

Selon une forme de réalisation, l'appareil comprend plusieurs percuteurs chacun munis d'au moins une masse de frappe. Les masses de frappe respectives d'au moins deux percuteurs sont distantes l'une de l'autre au moins suivant le sens de circulation de la sangle en périphérie du tambour inférieur.

L'invention a aussi pour objet un procédé de mise en œuvre d'un appareil conforme à l'invention équipant un élévateur à godets tel qu'il vient d'être décrit.

Selon l'invention, le procédé comprend une opération de frappe séquentielle de la paroi de fond de la cuve par ledit au moins un percuteur mis en mobilité entre sa station inactive et sa station active par ladite motorisation que comprend l'appareil. La frappe de la paroi de fond de la cuve par ledit au moins un percuteur est génératrice d'une mise en résonance de la paroi de fond de la cuve qui provoque un refoulement d'un reliquat de granulat en fond de cuve vers les godets circulant en fond de cuve en surplomb de sa paroi de fond, notamment les godets situés en phase immédiatement remontante vers le sommet de la colonne.

L'énergie développée par les heurts potentiellement conséquents en fréquence et en amplitude qui sont séquentiellement appliqués contre la paroi de fond de la cuve par ledit au moins un percuteur, se propage dans la masse de ladite paroi de fond. La restitution par ladite paroi de fond de l'énergie développée par lesdits heurts provoque un refoulement efficace du reliquat de granulat présent en fond de cuve vers les godets lors de leur passage en fond de cuve, notamment à distance proche de la paroi de fond de la cuve.

En outre, la mise en mobilité avantageusement élastique dudit au moins un percuteur par la motorisation, favorise l'accélération du mouvement de la dite au moins une masse de frappe dont il est muni vers la paroi de fond de la cuve, ce qui procure un accroissement de l'énergie développée par le percuteur lorsqu'il heurte la paroi de fond de la cuve.

Selon une mise en œuvre du procédé, le moteur est placé sous la dépendance d'une servocommande régulant une mise en mobilité séquentielle dudit au moins un percuteur entre sa station active et sa station inactive, et/ou régulant l'amplitude de la course dudit au moins un percuteur en fonction d'une amplitude souhaitée des heurts à appliquer contre la paroi de fond de la cuve. Une application séquentielle de heurts contre la paroi de fond de la cuve par ledit au moins un percuteur peut être régulée en fréquences et/ou en amplitudes selon la quantité restante de granulat en fond de cuve et/ou selon la masse et/ou le volume individuels des grains composant ledit granulat, notamment en fonction de la nature botanique des céréales dont est issu le granulat.

Selon une mise en œuvre du procédé, au moins deux percuteurs sont entraînés par la motorisation, sous contrôle de ladite servocommande, selon des cinématiques et/ou des séquences individualisées des percuteurs qui peuvent être avantageusement différenciées entre les percuteurs.

Au cours notamment d'une opération d'installation de l'appareil en contrebas de la cuve de l'élévateur, le procédé comprend une opération de calibrage de l'appareil selon laquelle ledit au moins un percuteur est positionné en station inactive par rapport à la paroi de fond de la cuve. Avantageusement et de préférence, le positionnement de l'appareil est réalisé par montage dudit caisson sur la cuve en une position prédéfinie, à l'intérieur duquel caisson l'appareil est lui-même installable en une position prédéfinie, subsidiairement via un moyen de réglage du positionnement de l'appareil en fond du caisson.

### Présentation des figures

L'invention sera mieux comprise à la lecture de la description détaillée qui suit d'exemples de réalisation de la présente invention, en relation avec les figures suivantes :
[Fig. 1] La figure 1 est une représentation schématique d'un élévateur à godets relevant de l'art antérieur, illustrant le contexte de l'invention.
[Fig. 2] La figure 2 est une illustration schématique pour exemple de la base d'un élévateur à godets conforme à l'invention, logeant un appareil de dispersion par percussion d'un reliquat de granulat en fond d'une cuve équipant ledit élévateur à godets, selon un exemple de réalisation d'un tel appareil qui est conforme à l'invention.
[Fig. 3] La figure 3 est une illustration de modalités de réglage d'un écart de séparation entre des godets et une paroi de fond de la cuve que comprend l'élévateur à godets représenté sur la figure 2.

### Description détaillée de modes de réalisation de l'invention

Les figures et leurs descriptions détaillées non limitatives, exposent l'invention selon des modalités particulières qui ne sont pas restrictives quant à la portée de l'invention telle que définie par les revendications. Les figures et leurs descriptions détaillées d'exemples de réalisation de l'invention peuvent servir à mieux la définir, si besoin en relation avec la description générale qui vient d'en être faite.

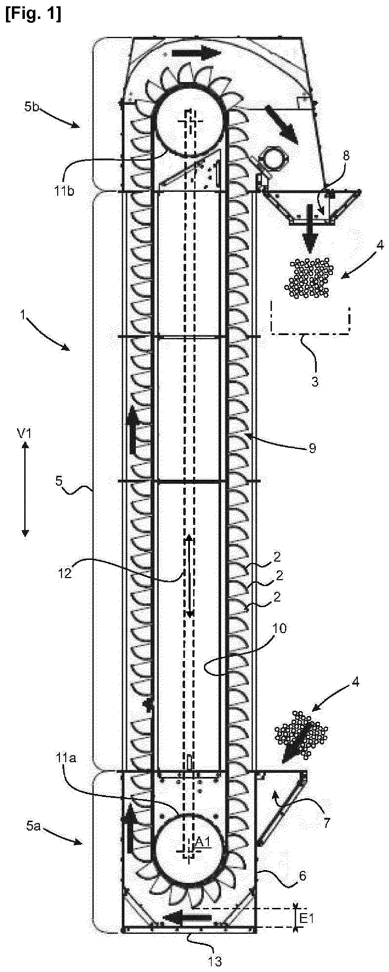

Sur la figure 1, un exemple d'élévateur 1 à godets 2 relevant de l'art antérieur est représenté afin d'illustrer à titre indicatif non restrictif le contexte de la présente invention. Un tel élévateur 1 à godets 2 est typiquement utilisé dans le domaine agricole pour approvisionner un silo 3 en granulat 4 de céréales ou par analogie en farine céréalière. L'élévateur 1 est agencé en une colonne 5 qui s'étend en élévation verticalement V1 depuis le sol.

La base 5a de la colonne 5 ménage une cuve 6 pourvue d'une bouche d'admission 7 du granulat 4 depuis l'extérieur de l'élévateur 1. Le sommet 5b de la colonne 5 ménage un déversoir 8 du granulat 4 vers le silo 3, via une bouche d'évacuation 8a du granulat 4 hors de l'élévateur 1. La colonne 5 loge un convoyeur 9 à godets 2 qui s'étend entre la cuve 6 et le déversoir 8, pour acheminer successivement par paquets et en vrac du granulat 4 depuis la cuve 6 vers le déversoir 8.

Les godets 2 sont successivement répartis le long d'une sangle 10 pour leur entraînement entre la cuve 6 et le déversoir 8. La sangle 10 est refermée en boucle sur elle-même et est entrainée sur elle-même entre la cuve 6 et le déversoir 8, via des tambours 11a, 11b qui sont montés tournant sur la colonne 5, la sangle 10 circulant en périphérie des tambours 11a, 11b. Un tambour supérieur 11b est placé à l'extrémité supérieure de la sangle 10 et un tambour inférieur 11a est placé à l'extrémité inférieure de la sangle 10.

La sangle 10 circule à l'intérieur de la cuve 6, en disposant les godets 2 en fond de cuve 6 pour prélever du granulat 4 préalablement introduit à l'intérieur de la cuve 6, successivement par paquets par piochage du granulat 4 en vrac par les godets 2. Les godets 2 sont ainsi successivement acheminés via la sangle 10 depuis la cuve 6 vers le déversoir 8, puis depuis le déversoir 8 vers la cuve 6. Le granulat 4 admis à l'intérieur de la cuve 6 est collecté en continu en vrac et par parquets de granulats 4 successivement piochés en fond de cuve 6 par les godets 2, pour leur convoyage depuis la cuve 6 vers le sommet 5b de la colonne 5 et leur évacuation hors de l'élévateur 1 vers le silo 3 via le déversoir 8.

La sangle 10 est maintenue en tension entre ses extrémités en périphérie des tambours 11a, 11b, via un premier dispositif de réglage 12 de la mise sous tension de la sangle 10 à un seuil d'effort de consigne. Un tel premier dispositif de réglage 12 est couramment agencé en organe procurant un éloignement des tambours 11a, 11b verticalement V1 l'un de l'autre, par exemple à partir d'un montage en mobilité verticale V1 et d'un blocage en position de l'un au moins des tambours 11a, 11b sur la colonne 5.

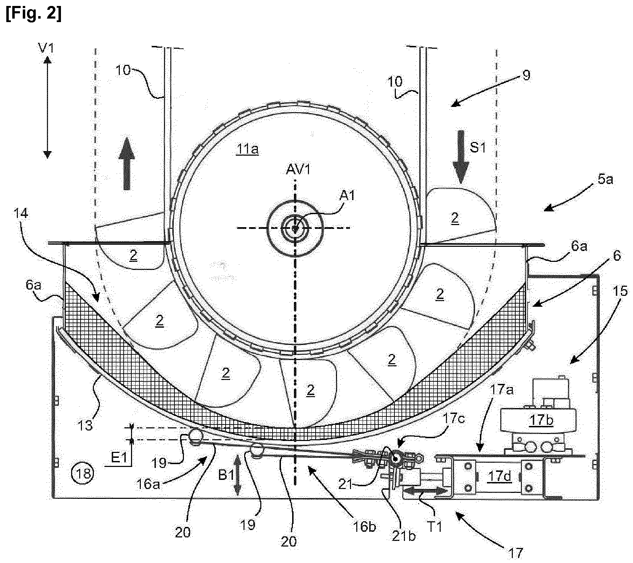

Un écart E1 vertical V1 est maintenu entre les godets 2 balayant le fond de la cuve 6 et une paroi de fond 13 de la cuve 6 sur laquelle repose le granulat, pour ne pas faire obstacle à la circulation des godets 2 à l'intérieur de la cuve 6. Cependant, un tel écart E1 ménage en fond de cuve 6 une capacité à l'intérieur de laquelle un reliquat 14 de granulat 4 est susceptible de stagner, comme illustré sur la figure 2, ce que l'invention propose d'éviter.

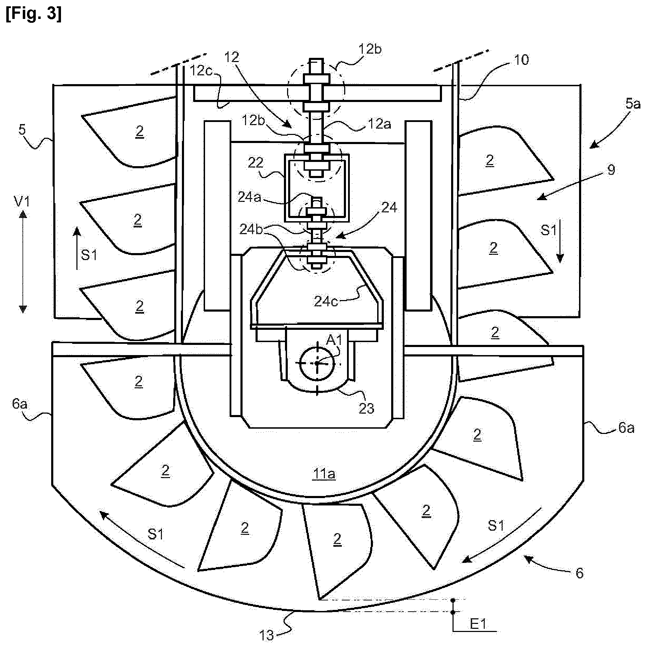

A cet effet, un exemple de réalisation de l'invention est illustré sur la figure 2 et la figure 3, à titre non restrictif, qui représentent un agencement particulier de la base 5a de la colonne 5 d'un élévateur 1 à godets 2 relevant de l'invention, équipé d'un appareil 15 conforme à un exemple de réalisation de l'invention. Pour décrire l'invention en relation avec les figures 2 et 3, les numéros de référence utilisés sur la figure 1 sont conservés pour l'identification des notions et/ou des éléments communs à l'art antérieur et à l'invention.

Tel que précédemment décrit et pour préciser, un élévateur 1 à godets 2 relevant de l'invention et illustré partiellement sur les figures 2 et 3, ménage à la base 5a d'une colonne 5 une cuve 6 de réception en son fond d'un granulat 4 à acheminer vers un déversoir 8 via un convoyeur 9 à godets 2. Le granulat 4 repose à l'intérieur de la cuve 6 sur la paroi de fond 13 qu'elle comporte et le convoyeur 9 à godets 2 s'étend verticalement V1 en élévation à l'intérieur de la colonne 5.

Le convoyeur 9 à godets 2 comprend essentiellement les godets 2 qui sont répartis le long de la sangle 10 refermée en boucle sur elle-même, ou tout autre organe analogue comme par exemple un jeu de courroies ou de chaînes. La sangle 10 circule à ses extrémités respectives en périphérie des tambours 11a, 11b d'entraînement et/ou de guidage de la sangle 10, dont le tambour inférieur 11a comme illustré.

Un écart E1 vertical V1 est ménagé entre la paroi de fond 13 de la cuve 6 les godets 2 lors de leur passage en fond de cuve 6. La présence d'un tel écart E1 ménage une capacité de rétention d'un reliquat 14 de granulat 4, dont la stagnation en fond de cuve 6 est à éviter.

Dans ce contexte sur la figure 2, il est proposé par l'invention un appareil 15 de dispersion du reliquat 14 de granulat 4 susceptible de stagner en fond de la cuve 6. La paroi de fond 13 de la cuve 6 est une paroi rigide, qui est notamment formée d'une tôle de conformation arquée. La paroi de fond 13 est ainsi sensiblement centrée sur l'axe A1 de rotation du tambour inférieur 11a, de manière à favoriser le prélèvement du granulat 4 par piochage en fond de cuve 6 via les godets 2.

L'appareil 15 comprend des percuteurs 16a, 16b heurtant séquentiellement la paroi de fond 13 de la cuve 6 pour refouler les grains dudit reliquat 14 vers les godets 2 lors de leur passage en fond de la cuve 6. Les percuteurs 16a, 16b sont mis en mobilité par une motorisation 17 comprenant un moteur 17a équipé d'une servocommande 17b, qui manœuvre un organe d'entraînement 17c en mobilité des percuteurs 16a, 16b entre une station inactive et une station active de percussion de la paroi de fond 13 de la cuve 6.

L'appareil 15 est logé à l'intérieur d'un caisson 18 ménageant une enceinte entourant la cuve 6, à laquelle le caisson 18 est fixé de manière réversible tel que par exemple par boulonnage. Le caisson 18 est fixé à la paroi périphérique 6a latérale de la cuve 6, de sorte que les percuteurs 16a, 16b sont placés en une position prédéfinie sous la paroi de fond 13 de la cuve 6. L'appareil 15 est disposé en contrebas à distance verticale V1 de la paroi de fond 13 de la cuve 6, en autorisant une mise en mobilité B1 des percuteurs 16a, 16b entre leur station inactive et leur station active, tel que par basculement B1 selon l'exemple illustré.

La solidarisation entre la cuve 6 et le caisson 18 permet de garantir un positionnement correct des percuteurs 16a, 16b par rapport à la paroi de fond 13 de la cuve 6, pour finalement garantir la frappe de la paroi de fond 13 de la cuve 6 par les percuteurs 16a, 16b lors de la mise en œuvre de l'appareil 15. L'installation de l'appareil 15 hors du volume de la cuve 6 évite aussi une implantation inopportune sur la paroi de fond 13 d'une masse pesante qui serait susceptible de la fragiliser, et permet aussi d'éviter tout contact entre l'appareil 15 et le granulat 14 contenu à l'intérieur de la cuve 6.

Les percuteurs 16a, 16b comprennent chacun une masse de frappe 19 qui est notamment disposée sous la paroi de fond 13 de la cuve 6 en aval des godets 2 suivant le sens S1 de circulation de la sangle 10 en périphérie du tambour inférieur 11a et par rapport à un axe vertical AV1 de positionnement sur la colonne 5 de l'axe de rotation A1 du tambour inférieur 11a.

Les masses de frappe 19 respectives des percuteurs 16a, 16b sont disposées à distance l'une de l'autre suivant le sens S1 de circulation de la sangle 10 en périphérie du tambour inférieur 11a, ledit sens S1 étant globalement orienté perpendiculairement à une orientation de mise en mobilité B1 par basculement des percuteurs 16a, 16b via la motorisation 17. Ceci procure un refoulement efficace et une collecte confortée du granulat 4 vers les godets 2, notamment ceux dont le débouché est orienté proche des percuteurs 16a, 16b préalablement à leur remontée vers le déversoir 8.

Selon l'exemple de réalisation illustré, les percuteurs 16a, 16b sont chacun agencés en marteau comprenant un bras 20 dont l'une première des extrémités est munie d'une masse de frappe 19 et dont l'autre deuxième extrémité est fixée à l'organe d'entraînement 17c. Les percuteurs 16a, 16b sont montés mobiles B1 en basculement entre leur station active et leur station inactive, via un arbre 21 constitutif dudit organe d'entraînement 17c qui est monté tournant sur un palier 21b.

Le moteur 17a est formé d'un vérin 17d manœuvrable en translation T1 par aller-retour répétés sous contrôle de la servocommande 17b, provoquant une mise en pivotement de l'arbre 21 suivant des sens de rotation alternés, qui entraîne alors en mobilité B1 par basculement alterné les percuteurs 16a, 16b entre leur station active et leur station inactive.

Les bras 20 des percuteurs 16a, 16b sont avantageusement flexibles, tout en présentant une raideur naturelle suffisante pour résister au poids de la masse de frappe 19 à leur première extrémité. La flexibilité des bras 20 permet de garantir la faculté des percuteurs 16a, 16b à heurter la paroi de fond 13 de la cuve 6, quel que soit raisonnablement la position verticale V1 de la cuve 6 par rapport aux percuteurs 16a, 16b. La flexibilité des bras 20 favorise aussi une accélération des masses de frappe 19 lors de la mise en mobilité des percuteurs 16a, 16b, ce qui permet d'accroître l'énergie transmise à la paroi de fond 13 de la cuve 6 lors de sa frappe par les percuteurs 16a, 16b.

En phase de vidange de la cuve 6, les godets 2 sont entraînés en mobilité entre la cuve 6 et le déversoir 8 pour récupérer un reliquat 14 de granulat 4 présent en fond de cuve 6. La mise en œuvre de l'appareil 15 est commandée, via la servocommande 17b, pour repousser les grains composant le reliquat 14 de granulat 4 vers les godets 2 lors de leur passage en fond de cuve 6. Le moteur 17a est activé pour provoquer, sous contrôle de la servocommande 17b, des heurts séquentiellement répétés à fréquences constantes ou variables, de la paroi de fond 13 de la cuve 6 par les percuteurs 16a, 16b provoquant un refoulement vers les godets 2 des grains dudit reliquat 14 de granulat 4 jusqu'à son épuisement.

Sur la figure 3, le convoyeur 9 est équipé d'un dit premier dispositif de réglage 12 de la mise sous tension de la sangle 10 à un seuil d'effort de consigne.

Le premier dispositif de réglage 12 comprend une première tige filetée 12a munie d'un premier jeu d'écrous 12b d'immobilisation de la première tige filetée 12a, d'une part sur un premier support 12c équipant la colonne 5 et d'autre part sur une armature 22 de montage sur la colonne 5 d'un ensemble d'organes comprenant un palier 23 de montage tournant du tambour inférieur 11a sur la colonne 5. L'éloignement vertical V1 entre le tambour supérieur 11b et le tambour inférieur 11a peut être réglé, via les écrous du premier jeu d'écrous 12b, par adaptation de l'extension verticale V1 de la première tige filetée 12a entre le premier support 12c et l'armature 22.

Le convoyeur 9 est par ailleurs équipé d'un deuxième dispositif de réglage 24 de la distance de séparation E1 entre la paroi de fond 13 de la cuve 6 et les godets 2 lors de leur passage en fond de cuve 6.

A cet effet, ledit ensemble d'organes comprend non seulement le palier 23 de montage tournant du tambour inférieur 11a sur la colonne 5 mais aussi la cuve 6. Dès lors, il est compris ici que le réglage de la distance de séparation entre le tambour supérieur 11b et le tambour inférieur 11a, est réalisé via le premier dispositif de réglage 12 qui provoque une mobilité relative verticalement V1 entre d'une part le tambour supérieur 11b et d'autre part conjointement le tambour inférieur 11a et la cuve 6, via le palier 23 de montage du tambour inférieur 11a sur la colonne 5.

Le deuxième dispositif de réglage 24 comprend une deuxième tige filetée 24a munie d'un deuxième jeu d'écrous 24b d'immobilisation de la deuxième tige filetée 24a, d'une part sur ladite armature 22 et d'autre part sur un deuxième support 24c équipant le palier 23 de montage du tambour inférieur 11a sur la colonne 5. L'ajustement de la distance de séparation E1 entre la paroi de fond 13 de la cuve 6 et les godets 2 lors de leur passage en fond de cuve 6 est réalisé par réglage, via les écrous du deuxième jeu d'écrous 24b, de l'extension verticale V1 de la deuxième tige filetée 24a entre l'armature 22 et le deuxième support 24c.

Ceci permet de limiter la capacité de la cuve 6 à l'intérieur de laquelle un reliquat 14 de granulat 4 est susceptible de stagner en fond de cuve 6, et cela quel que soit l'effort de mise sous tension de la sangle 10 à un seuil d'effort de consigne via le premier dispositif de réglage 12. Un prélèvement optimisé du granulat 4 par les godets 2 est ainsi favorisé, ce qui limite le volume d'un reliquat 14 de granulat 4 susceptible de stagner en fond de cuve 6 et ce qui facilite le refoulement vers les godets 2 des grains composant un tel reliquat 14 de granulat 4 par suite de la percussion de la paroi de fond 13 par les percuteurs 16a, 16b.

## Revendications

1. Elévateur (1) à godets (2) comprenant une colonne (5) s'étendant en élévation verticalement (V1) par rapport au sol et logeant un convoyeur (9) à godets (2), l'élévateur (1) à godets (2) comprenant une cuve (6) de réception d'un granulat (4) à convoyer vers le sommet (5b) de la colonne (5) via lesdits godets (2), la cuve (6) étant ménagée à la base (5a) de la colonne (5) et comprenant une paroi de fond (13), l'élévateur (1) à godets (2) étant équipé d'un appareil (15) de dispersion d'un reliquat (14) de granulat (4) en fond de la cuve (6) vers les godets (2) lors de leur passage en fond de cuve (6), ledit appareil (15) étant disposé à l'extérieur de la cuve (6) et comprenant un organe générateur de vibrations de la paroi de fond (13) de la cuve (6),
le convoyeur (9) à godets (2) comprend une sangle (10) qui est refermée en boucle sur elle-même et le long de laquelle sont répartis les godets (2), les extrémités de la sangle (10) s'étendant respectivement en périphérie d'un tambour supérieur (11b) ménagé tournant au sommet (5b) de la colonne (5) et d'un tambour inférieur (11a) ménagé tournant à la base (5a) de la colonne (5), la sangle (10) étant entraînée en mobilité sur elle-même via l'un au moins desdits tambours (11a, 11b) qui est motorisé en rotation,
l'élévateur à godets (2) étant **caractérisé en ce que** la paroi de fond (13) de la cuve (6) est rigide et l'organe générateur de vibrations comprend au moins un percuteur (16a, 16b) et une motorisation (17) de mise en mobilité séquentielle dudit au moins un percuteur (16a, 16b) entre une station inactive du percuteur (16a, 16b), dans laquelle le percuteur (16a, 16b) est en position stable, et une station active du percuteur (16a, 16b), dans laquelle le percuteur (16a, 16b) est entraîné en mobilité par la motorisation (17).

2. Elévateur (1) à godets (2) selon la revendication 1, **caractérisé en ce que** ledit au moins un percuteur (16a, 16b) est monté mobile (B1) sur l'appareil (15) entre sa station active et sa station inactive, via un organe d'entraînement (17c) dudit au moins un percuteur (16a, 16b) qui est mû par un moteur (17b) que comprend ladite motorisation (17).

3. Elévateur (1) à godets (2) selon la revendication 2, **caractérisé en ce que** ledit au moins un percuteur (16a, 16b) est monté élastiquement mobile (B1) sur l'appareil (15), via un organe élastiquement déformable (20) interposé entre ledit organe d'entraînement (17c) et au moins une masse de frappe (19) que comprend le percuteur (16a, 16b).

4. Elévateur (1) à godets (2) selon la revendication 3, **caractérisé en ce que** ledit au moins un percuteur (16a, 16b) est agencé en marteau mobile (B1) en basculement, comprenant au moins une masse de frappe (19) qui est montée à une première extrémité d'un bras (20) dont l'autre deuxième extrémité est reliée audit organe d'entraînement (17c).

5. Elévateur (1) à godets (2) selon la revendication 4, **caractérisé en ce que** le bras (20) forme au moins en partie ledit organe élastiquement déformable, en étant flexible entre ses extrémités et générateur en station active d'une mobilité (B1) en basculement élastique du percuteur (16a, 16b) via ledit organe d'entraînement (17c).

6. Elévateur (1) à godets (2) selon l'une quelconque des revendications 3 à 5, **caractérisé en ce que** les percuteurs (16a, 16b) sont en pluralité, les masses de frappe (19) respectives d'au moins deux percuteurs (16a, 16b) étant distantes l'une de l'autre suivant au moins une direction concourante à une orientation de mises en mobilité individuelles des percuteurs (16a, 16b) entre leur station inactive et leur station active.

7. Elévateur (1) à godets (2) selon les revendications 2 à 4, **caractérisé en ce que** ledit moteur (17a) est formé d'un vérin d'entraînement séquentiel en pivotement alterné d'un arbre tournant (21) constitutif dudit organe d'entraînement (17c), via lequel arbre tournant (21) une pluralité de percuteurs (16a, 16b) sont individuellement mis en mobilité entre leur station inactive et leur station active suivant des cinématiques propres qui sont différenciées.

8. Elévateur (1) à godets (2) selon l'une quelconque des revendications 1 à 7, **caractérisé**
**en ce que** la motorisation (17) de l'appareil (15) est disposée à distance en contrebas de la paroi de fond (13) de la cuve (6) et ledit au moins un percuteur (16a, 16b) s'étend sous la paroi de fond (13) de la cuve (6) qui est formée d'une tôle arquée suivant le trajet suivi par la sangle (10) en périphérie du tambour inférieur (11a).

9. Elévateur (1) à godets (2) selon la revendication 8, **caractérisé en ce que** l'appareil (15) est installé à l'intérieur d'un caisson (18) qui s'étend sous la cuve (6) en étant fixé en suspension sur une paroi latérale (6a) de la cuve (6) par brochage réversible.

10. Elévateur (1) à godets (2) selon l'une quelconque des revendications 8 et 9, **caractérisé** :
**en ce que** la cuve (6) et un palier (23) de montage tournant du tambour inférieur (11a) sur la colonne (5) forme au moins en partie un ensemble d'organes (23, 6) qui est monté en mobilité verticale (V1) sur la colonne(5), via un premier dispositif de réglage (12) d'une mise sous tension de la sangle (10) entre ses extrémités par éloignement vertical (V1) dudit ensemble d'organes (23, 6) par rapport au tambour supérieur(11b), et
**en ce que** l'élévateur est équipé d'un deuxième dispositif de réglage (24) de la distance (E1) de séparation entre la paroi de fond (13) de la cuve (6) et les godets (2) lors de leur passage en fond de cuve (6), par montage en mobilité relative entre la cuve (6) et le palier (23) du tambour inférieur (11a), verticalement (V1) au sein dudit ensemble d'organes (23, 6).

11. Elévateur (1) à godets (2) selon l'une quelconque des revendications 8 à 10, **caractérisé en ce que** ledit au moins un percuteur (16a, 16b) est placé sous la paroi de fond (13) de la cuve (6) en aval des godets (2) suivant le sens (S1) de circulation de la sangle (10) en périphérie du tambour inférieur (11a) et par rapport à un axe vertical (AV1) de positionnement sur la colonne (5) de l'axe de rotation (A1) du tambour inférieur (11a).

12. Elévateur (1) à godets (2) selon l'une quelconque des revendications 8 à 11, **caractérisé en ce que** l'appareil (15) comprenant plusieurs percuteurs (16a, 16b) chacun munis d'au moins une masse de frappe (19), les masses de frappe (19) respectives d'au moins deux percuteurs (16a, 16b) sont distantes l'une de l'autre au moins suivant le sens (S1) de circulation de la sangle (10) en périphérie du tambour inférieur (11a).

13. Procédé de mise en œuvre de l'appareil (15) de dispersion d'un reliquat (14) de granulat (4) en fond de la cuve (6) d'un élévateur à godets (2) selon l'une quelconque des revendications 1 à 12, **caractérisé en ce que** le procédé comprend une opération de frappe séquentielle de la paroi de fond (13) de la cuve (6) par ledit au moins un percuteur (16a, 16b) mis en mobilité (B1) entre sa station inactive et sa station active par ladite motorisation (17) que comprend l'appareil (15), la frappe de la paroi de fond (13) de la cuve (6) par ledit au moins un percuteur (16a, 16b) étant génératrice d'une mise en résonance de la paroi de fond (13) de la cuve (6) qui provoque le refoulement du reliquat (14) de granulat (4) en fond de cuve (6) vers les godets (2) circulant en fond de cuve (6) en surplomb de sa paroi de fond (13).

14. Procédé selon la revendication 13, dans lequel l'élévateur à godets est selon la revendication 9, **caractérisé en ce que** le procédé comprend une opération de calibrage de l'appareil (15) selon laquelle ledit au moins un percuteur (16a, 16b) est positionné en station inactive par rapport à la paroi de fond (13) de la cuve (6), par montage dudit caisson (18) sur la cuve (6) en une position prédéfinie, à l'intérieur duquel caisson (18) l'appareil (15) est lui-même installable en une position prédéfinie.

## Patentansprüche

1. Hebewerk (1) mit Bechern (2), umfassend eine Säule (5), die sich vertikal (V1) vom Boden aus nach oben erstreckt und einen Förderer (9) mit Bechern (2) beherbergt, wobei das Hebewerk (1) mit Bechern (2) eine Wanne (6) zur Aufnahme eines Granulats (4) umfasst, das über die Becher (2) zur Spitze (5b) der Säule (5) befördert werden soll, wobei die Wanne (6) an dem Sockel (5a) der Säule (5) angeordnet ist und eine Bodenwand (13) umfasst, wobei das Hebewerk (1) mit Bechern (2) mit einem Gerät (15) zum Verteilen eines Rests (14) von Granulat (4) am Boden der Wanne (6) in Richtung der Becher (2) während ihres Durchgangs am Boden der Wanne (6) ausgestattet ist, wobei das Gerät (15) außerhalb der Wanne (6) angeordnet ist und ein Organ zur Erzeugung von Vibrationen der Bodenwand (13) der Wanne (6) umfasst,
wobei der Förderer (9) mit Bechern (2) einen Gurt (10) umfasst, der in sich selbst zu einer Schleife geschlossen ist und entlang dessen die Becher (2) verteilt sind, wobei die Enden des Gurts (10) sich jeweils am Umfang einer oberen Trommel (11b), die drehbar an der Spitze (5b) der Säule (5) angeordnet ist, und einer unteren Trommel (11a), die drehbar an dem Sockel (5a) der Säule (5) angeordnet ist, erstrecken, wobei der Gurt (10) über mindestens eine der Trommeln (11a, 11b), die drehbar motorisiert ist, um sich selbst beweglich angetrieben wird,
wobei das Hebewerk mit Bechern (2) **dadurch gekennzeichnet ist, dass** die Bodenwand (13) der Wanne (6) starr ist und das Organ zur Erzeugung von Vibrationen mindestens einen Schlagbolzen (16a, 16b) und einen Antrieb (17) zur sequentiellen Mobilisierung des mindestens einen Schlagbolzens (16a, 16b) zwischen einer inaktiven Station des Schlagbolzens (16a, 16b), in der sich der Schlagbolzen (16a, 16b) in einer stabilen Position befindet, und einer aktiven Station des Schlagbolzens (16a, 16b), in der der Schlagbolzen (16a, 16b) durch den Antrieb (17) beweglich angetrieben wird, umfasst.

2. Hebewerk (1) mit Bechern (2) nach Anspruch 1, **dadurch gekennzeichnet, dass** der mindestens eine Schlagbolzen (16a, 16b) beweglich (B1) auf dem Gerät (15) zwischen seiner aktiven Station und seiner inaktiven Station über ein Antriebsorgan (17c) des mindestens einen Schlagbolzens (16a, 16b) angebracht ist, das von einem Motor (17b) bewegt wird, den der Antrieb (17) umfasst.

3. Hebewerk (1) mit Bechern (2) nach Anspruch 2, **dadurch gekennzeichnet, dass** der mindestens eine Schlagbolzen (16a, 16b) elastisch beweglich (B1) auf dem Gerät (15) über ein elastisch verformbares Organ (20) angebracht ist, das zwischen dem Antriebsorgan (17c) und mindestens einer Schlagmasse (19), die der Schlagbolzen (16a, 16b) umfasst, eingefügt ist.

4. Hebewerk (1) mit Bechern (2) nach Anspruch 3, **dadurch gekennzeichnet, dass** der mindestens eine Schlagbolzen (16a, 16b) als kippbeweglicher (B1) Hammer angeordnet ist, der mindestens eine Schlagmasse (19) umfasst, die an einem ersten Ende eines Arms (20) angebracht ist, dessen anderes zweites Ende mit dem Antriebsorgan (17c) verbunden ist.

5. Hebewerk (1) mit Bechern (2) nach Anspruch 4, **dadurch gekennzeichnet, dass** der Arm (20) mindestens teilweise das elastisch verformbare Organ bildet, indem er zwischen seinen Enden flexibel ist und in aktiver Station eine elastische Kippbewegung (B1) des Schlagbolzens (16a, 16b) über das Antriebsorgan (17c) erzeugt.

6. Hebewerk (1) mit Bechern (2) nach einem der Ansprüche 3 bis 5, **dadurch gekennzeichnet, dass** es eine Vielzahl von Schlagbolzen (16a, 16b) gibt, wobei die jeweiligen Schlagmassen (19) von mindestens zwei Schlagbolzen (16a, 16b) in mindestens einer Richtung voneinander beabstandet sind, die zu einer Ausrichtung der individuellen Mobilisierungen der Schlagbolzen (16a, 16b) zwischen ihrer inaktiven Station und ihrer aktiven Station beiträgt.

7. Hebewerk (1) mit Bechern (2) nach den Ansprüchen 2 bis 4, **dadurch gekennzeichnet, dass** der Motor (17a) aus einem Zylinder zum sequenziellen Antrieb einer Drehwelle (21), die das Antriebsorgan (17c) bildet, durch abwechselndes Schwenken gebildet wird, wobei über die Drehwelle (21) eine Vielzahl von Schlagbolzen (16a, 16b) einzeln zwischen ihrer inaktiven Station und ihrer aktiven Station gemäß eigenen Kinematiken, die differenziert sind, in Bewegung versetzt werden.

8. Hebewerk (1) mit Bechern (2) nach einem der Ansprüche 1 bis 7, **dadurch gekennzeichnet, dass** der Antrieb (17) des Geräts (15) im Abstand unterhalb der Bodenwand (13) der Wanne (6) angeordnet ist und sich der mindestens eine Schlagbolzen (16a, 16b) unter der Bodenwand (13) der Wanne (6) erstreckt, der aus einem gebogenen Blech gebildet ist, das dem Weg folgt, dem der Gurt (10) am Umfang der unteren Trommel (11a) folgt.

9. Hebewerk (1) mit Bechern (2) nach Anspruch 8, **dadurch gekennzeichnet, dass** das Gerät (15) innerhalb eines Kastens (18) installiert ist, der sich unter der Wanne (6) erstreckt, indem er durch umkehrbare Verstiftung an einer Seitenwand (6a) der Wanne (6) aufgehängt ist.

10. Hebewerk (1) mit Bechern (2) nach einem der Ansprüche 8 und 9, durch Folgendes gekennzeichnet:
dass die Wanne (6) und ein Lager (23) zur drehbaren Anbringung der unteren Trommel (11a) an der Säule (5) mindestens teilweise eine Einheit von Organen (23, 6) bilden, die vertikal beweglich (V1) an der Säule (5) über eine erste Einstellvorrichtung (12) eines Spannens des Gurts (10) zwischen seinen Enden durch vertikale (V1) Entfernung der Einheit von Organen (23, 6) in Bezug auf die obere Trommel (11b) angebracht ist,
und dass das Hebewerk mit einer zweiten Einstellvorrichtung (24) für den Abstand (E1) der Trennung zwischen der Bodenwand (13) der Wanne (6) und den Bechern (2) bei ihrem Durchgang durch den Boden der Wanne (6) durch Anbringen in relativer Beweglichkeit zwischen der Wanne (6) und dem Lager (23) der unteren Trommel (11a), vertikal (V1) innerhalb der Einheit von Organen (23, 6), ausgestattet ist.

11. Hebewerk (1) mit Bechern (2) nach einem der Ansprüche 8 bis 10, **dadurch gekennzeichnet, dass** der mindestens eine Schlagbolzen (16a, 16b) unter der Bodenwand (13) der Wanne (6) nach den Bechern (2) entlang der Umlaufrichtung (S1) des Gurts (10) am Umfang der unteren Trommel (11a) und in Bezug auf eine vertikale Achse (AV1) zur Positionierung auf der Säule (5) der Drehachse (A1) der unteren Trommel (11a) angeordnet ist.

12. Hebewerk (1) mit Bechern (2) nach einem der Ansprüche 8 bis 11, **dadurch gekennzeichnet, dass** das Gerät (15) mehrere Schlagbolzen (16a, 16b) umfasst, die jeweils mit mindestens einer Schlagmasse (19) versehen sind, wobei die jeweiligen Schlagmassen (19) von mindestens zwei Schlagbolzen (16a, 16b) mindestens in der Umlaufrichtung (S1) des Gurts (10) am Umfang der unteren Trommel (11a) voneinander beabstandet sind.

13. Verfahren zum Einsatz des Geräts (15) zum Verteilen eines Rests (14) von Granulat (4) am Boden der Wanne (6) eines Hebewerks mit Bechern (2) nach einem der Ansprüche 1 bis 12, **dadurch gekennzeichnet, dass** das Verfahren einen sequenziellen Schlagvorgang auf die Bodenwand (13) der Wanne (6) durch den mindestens einen Schlagbolzen (16a, 16b) umfasst, der durch den Antrieb (17), den das Gerät (15) umfasst, zwischen seiner inaktiven Station und seiner aktiven Station in Bewegung (B1) versetzt wird, wobei das Schlagen auf die Bodenwand (13) der Wanne (6) durch den mindestens einen Schlagbolzen (16a, 16b) eine Resonanzbildung der Bodenwand (13) der Wanne (6) erzeugt, die dazu führt, dass der Rest (14) des Granulats (4) am Boden der Wanne (6) zu den Bechern (2) geschoben wird, die am Boden der Wanne (6) über ihre Bodenwand (13) umlaufen.

14. Verfahren nach Anspruch 13, wobei das Hebewerk mit Bechern nach Anspruch 9 **dadurch gekennzeichnet ist, dass** das Verfahren einen Kalibriervorgang des Geräts (15) umfasst, wobei der mindestens eine Schlagbolzen (16a, 16b) in Bezug auf die Bodenwand (13) der Wanne (6) in einer inaktiven Station positioniert wird, indem der Kasten (18) an der Wanne (6) in einer vordefinierten Position angebracht wird, wobei innerhalb des Kastens (18) das Gerät (15) selbst in einer vordefinierten Position installierbar ist.

## Claims

1. A bucket (2) elevator (1) comprising a column (5) extending in elevation vertically (V1) relative to the ground and housing a bucket (2) conveyor (9), the bucket (2) elevator (1) comprising a vessel (6) for receiving a granulate (4) to be conveyed to the top (5b) of the column (5) via said buckets (2), the vessel (6) being provided at the base (5a) of the column (5) and comprising a bottom wall (13), the bucket (2) elevator (1) being equipped with an apparatus (15) for dispersing a residue (14) of granulate (4) at the bottom of the vessel (6) towards the buckets (2) when passing through the bottom of the vessel (6), said apparatus (15) being disposed outside the vessel (6) and comprising a member generating vibrations of the bottom wall (13) of the vessel (6),
the bucket (2) conveyor (9) comprises a strap (10) which is closed in a loop on itself and along which the buckets (2) are distributed, the ends of the strap (10) respectively extending at the periphery of an upper drum (11b) rotatably provided at the top (5b) of the column (5) and of a lower drum (11a) rotatably provided at the base (5a) of the column (5), the strap (10) being movably driven on itself via at least one of the drums (11a, 11b) which is rotatably motor-driven,
the bucket (2) elevator being **characterised in that** the bottom wall (13) of the vessel (6) is rigid and the vibration generating member comprises at least one striker (16a, 16b) and a motor drive (17) for sequentially setting in motion the at least one striker (16a, 16b) between an inactive station of the striker (16a, 16b), in which the striker (16a, 16b) is in a stable position, and an active station of the striker (16a, 16b), in which the striker (16a, 16b) is movably driven by the motor drive (17).

2. The bucket (2) elevator (1) according to claim 1, **characterised in that** said at least one striker (16a, 16b) is movably mounted (B1) to the apparatus (15) between its active station and its inactive station, via a drive member (17c) for driving said at least one striker (16a, 16b) which is moved by a motor (17b) that said motor drive (17) comprises.

3. The bucket (2) elevator (1) according to claim 2, **characterised in that** said at least one striker (16a, 16b) is elastically movably mounted (B1) to the apparatus (15), via an elastically deformable member (20) sandwiched between said drive member (17c) and at least one hitting mass (19) that the striker (16a, 16b) comprises.

4. The bucket (2) elevator (1) according to claim 3, **characterised in that** said at least one striker (16a, 16b) is arranged as a rockably movable hammer (B1), comprising at least one hitting mass (19) which is mounted at a first end of an arm (20), the other, second, end of which is connected to the drive member (17c).

5. The bucket (2) elevator (1) according to claim 4, **characterised in that** the arm (20) at least partly forms said elastically deformable member, being flexible between its ends and generating in the active position an elastic rocking movability (B1) of the striker (16a, 16b) via said drive member (17c).

6. The bucket (2) elevator (1) according to any of claims 3 to 5, **characterised in that** the strikers (16a, 16b) are in plurality, the respective hitting masses (19) of at least two strikers (16a, 16b) are spaced apart from each other along at least one direction concurrent with an orientation of individually setting in motion the striker (16a, 16b) between their inactive position and their active position.

7. The bucket (2) elevator (1) according to claims 2 to 4, **characterised in that** said motor (17a) is formed by a cylinder for sequentially alternately pivotably driving a rotating shaft (21) constituting the drive member (17c), via which rotating shaft (21) a plurality of strikers (16a, 16b) are individually set in motion between their inactive position and their active position according to specific kinematics which are differentiated.

8. The bucket (2) elevator (1) according to any of claims 1 to 7, **characterised**
**in that** the motor drive (17) of the apparatus (15) is disposed at a distance underneath the bottom wall (13) of the vessel (6) and said at least one striker (16a, 16b) extends below the bottom wall (13) of the vessel (6), which is formed from a sheet metal arched along the path followed by the strap (10) at the periphery of the lower drum (11a).

9. The bucket (2) elevator (1) according to claim 8, **characterised in that** the apparatus (15) is installed inside a case (18) which extends under the vessel (6) by being attached in suspension on a side wall (6a) of the vessel (6) by reversible broaching.

10. The bucket (2) elevator (1) according to any of claims 8 and 9, **characterised**:
**in that** the vessel (6) and a bearing (23) for rotatably mounting the lower drum (11a) to the column (5) at least partly form a set of members (23, 6) which is vertically movably mounted (V1) to the column (5), via a first device (12) for adjusting tensioning of the strap (10) between its ends by vertically moving away (V1) said set of members (23, 6) relative to the upper drum (11b), and
**in that** the elevator is equipped with a second device (24) for adjusting the separation distance (El) between the bottom wall (13) of the vessel (6) and the buckets (2) when passing through the bottom of the vessel (6), by relatively movably mounting, between the vessel (6) and the bearing (23) of the lower drum (11a), vertically (V1) within said set of members (23, 6).

11. The bucket (2) elevator (1) according to any of claims 8 to 10, **characterised in that** said at least one striker (16a, 16b) is placed under the bottom wall (13) of the vessel (6) downstream of the buckets (2) along the direction (S1) of circulation of the strap (10) at the periphery of the lower drum (11a) and relative to a vertical axis (AV1) of positioning on the column (5) of the axis of rotation (A1) of the lower drum (11a).

12. The bucket (2) elevator (1) according to any of claims 8 to 11, **characterised in that** the apparatus (15) comprising several strikers (16a, 16b) each provided with at least one hitting mass (19), the respective hitting masses (19) of at least two strikers (16a, 16b) are spaced apart from each other at least along the direction (S1) of circulation of the strap (10) at the periphery of the lower drum (11a) .

13. A method for implementing the apparatus (15) for dispersing a residue (14) of granulate (4) at the bottom of the vessel (6) of a bucket (2) elevator according to any of claims 1 to 12, **characterised in that** the method comprises a operation of sequentially striking the bottom wall (13) of the vessel (6) by said at least one striker (16a, 16b) set in motion (B1) between its inactive station and its active station by said motor drive (17) that the apparatus (15) comprises, striking the bottom wall (13) of the vessel (6) by said at least one striker (16a, 16b) generating resonating of the bottom wall (13) of the vessel (6) which causes the residual (14) of granulate (4) at the bottom of the vessel (6) to be discharged towards the buckets (2) circulating at the bottom of the vessel (6) overhanging its bottom wall (13).

14. The method according to claim 13, wherein the bucket elevator is according to claim 9, **characterised in that** the method comprises an operation of calibrating the apparatus (15) wherein said at least one striker (16a, 16b) is positioned in an inactive station relative to the bottom wall (13) of the vessel (6), by mounting said case (18) to the vessel (6) in a predefined position, case (18) inside which the apparatus (15) is itself installable in a predefined position.
